# EUROPEAN PATENT SPECIFICATION

(11) **EP 1 066 758 B1**
(45) Date of publication and mention of the grant of the patent: **21.11.2001**
(21) Application number: 99830350.7
(22) Date of filing: 04.06.1999
(51) Int. Cl.: A22C 11/00

(54) **Device for binding roasts, sausages and the like by means of elastic rings**
Vorrichtung zum Binden von Bratwürsten, Braten mittels elastischer Ringe
Dispositif pour liage de rôtis, de saucisse et équivalents au moyen d'anneaux élastiques

(43) Date of publication of application: 10.01.2001
(73) Proprietor: Fra Production s.p.a., 14010 Cisterna D'Asti (AT) (IT)
(72) Inventor: Mignone, Giuseppe, 14010 Cisterna d'Asti (AT) (IT)
(74) Representative: Robba, Pierpaolo

(56) References cited:
- CH-A- 420 900
- DE-A- 4 201 863
- US-A- 3 386 370
- US-A- 3 823 442
- US-A- 4 621 482

## Description

The present invention refers to a device for binding roasts, sausages and the like by means of elastic rings.

It is well known that at present small butchers, or artisans working in this field, in order to prepare small quantities of chicken, rabbit and/or pork roasts, roll up said meat on a roundish shape and bind it with hemp string or elastic rings, so that, during cooking, said pieces of meat don't loose their original shape and their compactness, and can be presented to the cut in the best conditions.

The same is valid for salted meats and/or sausages of various kind, in which the consumer or the manufacturer wants to use said binding, weather for aesthetic reasons or for a better cooking.

Until now said binding operation with string and/or rings was performed manually, keeping the meat roll and/or salted meat with one hand and applying the string and/or elastic ring with the other hand, according to preferences or necessities.

It is also known in the art to wrap meat products with elastic nets. Document DE 42 01 863 discloses an apparatus used to wrap meat products with an elastic material, especially a net. This apparatus is equipped with a fixed concave support for the meat product to be wrapped and a movable spreader for holding the net open while the meat is pushed into said net.

Object of the present invention it is to overcome said drawbacks providing a device that makes easier said operations of applying elastic rings to meat rolls and/or salted meat rolls and contemporaneously facilitates their removal after binding.

The essential characteristics of the present invention will become more evident from the following claims.

The device will be now described in detail with particular reference to the attached drawings, provided as a non-limitative example, wherein:
Figure 1 is a lateral elevation view of the device according to the invention, with a "roast" which is going to be removed, after binding;
Figure 2 is a lateral elevation view, similar to Figure 1, of the device according to the invention, with a smaller "roast"; and

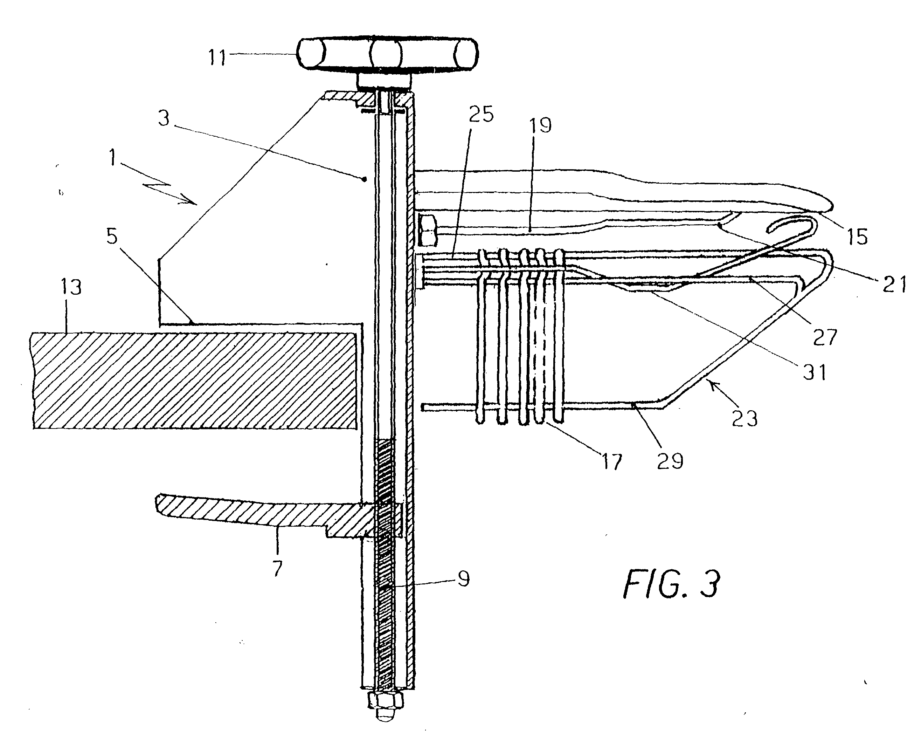

Figure 3 is a lateral elevation view of the device according to the invention, without any "roast" or meat roll.

As it is evident from the drawings, the present device, pointed out by 1, comprises a vertical rod 3, having a rectangular base 5, in which base slides a clamp 7 dragged by a threaded rod 9 having a knob 11 on its head, integral to the threaded rod for pressing the clamp 7 on the working table 13.

A concave element 15 is fixed to the vertical rod 3, on its top and perpendicular to it, made of stainless steel, which is suitable for containing the "roasts", the smaller ones as well as larger ones, to be bound by the elastic rings 17, as will be described later.

Below said concave element 15 an iron rod 19 is provided, running parallel to it, having an upward bending 21 in its fore part, towards outside.

Below said concave element 15 and relative rod iron 19, it is provided a device 23 carrying the elastic rings 17, made of three stainless steel rod irons 25, 27, 29, forming together a bracket and arranged two in the upper part and one in the lower, parallel one to the other and perpendicular to the vertical rod 3. Between the rod irons 25 and 27 it is provided a fourth rod iron 31, as an independent spring, so shaped as to maintain tidy the elastic rings 27 used during the operation.

The term "roasts" comprises, here, every kind of meat or sausage, small or large, that is to be bound with the elastic rings 17.

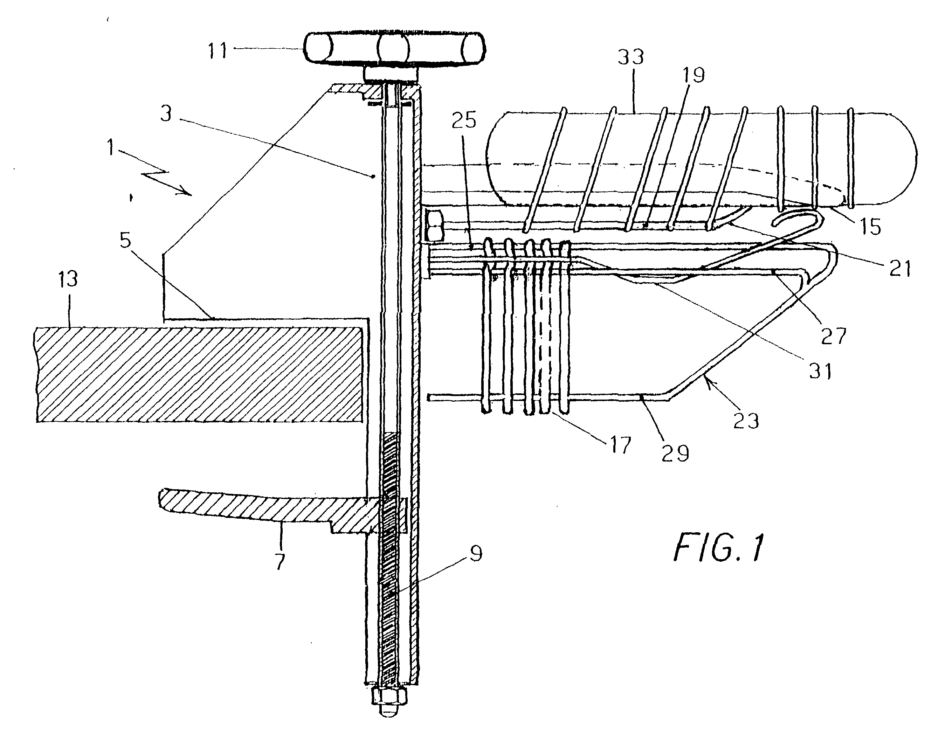

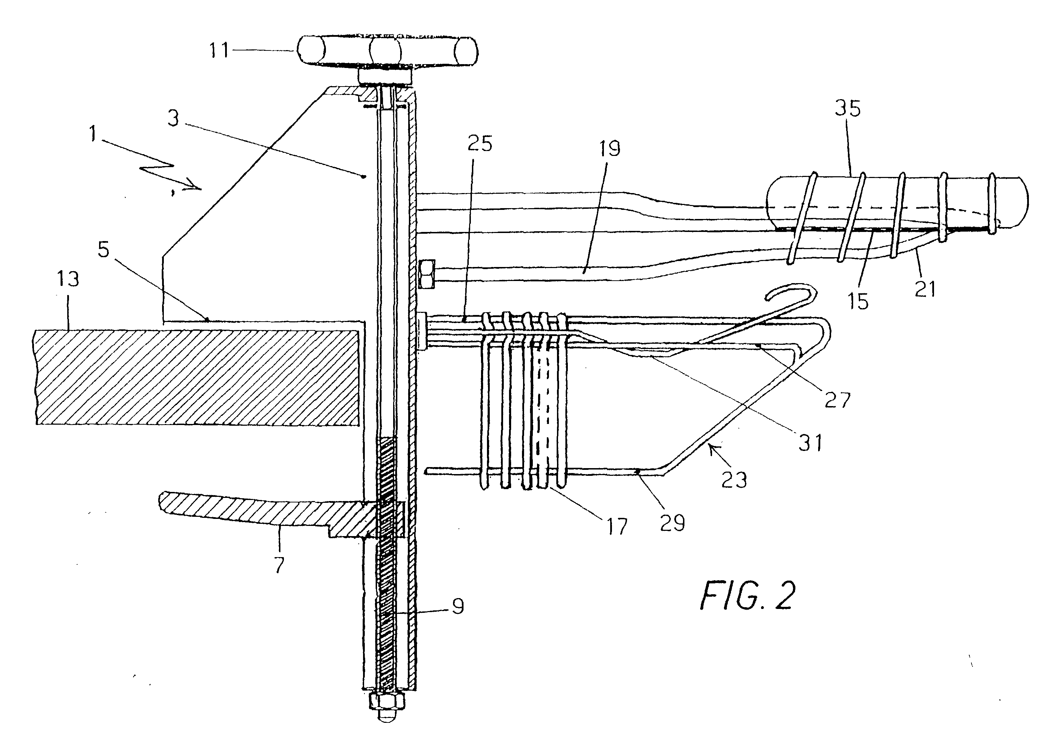

In figure 1 it is shown a large "roast" 33, in figure 2 a small "roast" 35; both have been bound by means of the elastic rings 17 and both are going to be removed from the concave element 15.

A description of the binding operation is necessary in order to understand the aim of the present invention.

Once it has been applied to the table 13, the device 1 is fixed and presents to the user both the concave part 15 and the part 23 carrying the elastic rings 17. The roast 33 or 35 is placed on the concave part 15 and the user can pull out said elastic rings 17 easily and rapidly from the lower part 23 carrying the rings and apply them to the roast 33 or 35 as desired. It is to be noted that the application is made very easy by the presence, below the concave element 15, of the element 19.

When the binding of the roast 33 or 35 has been performed with the desired number of elastic rings 17, said "roast" 33 or 35 is extracted from the concave part 15; the elastic rings 17 are bent on the right side because they are kept down by the ring tightener element 19, but, when they are extracted from the top 21 of the element 19, said elastic rings 17 regain their original position, substantially perpendicular to the roast axis.

## Claims

1. Device (1) for binding roasts, sausages and the like, by means of elastic rings, said device comprising:
- a vertical rod (3) having a rectangular base (5), in which base slides a clamp (7) dragged by a threaded rod (9) having a control knob (11), integral to the threaded rod (9), for pressing the clamp (7) on a working table (13),
- a concave element (15), fixed to the vertical rod (3), on its top and perpendicular to it, which is suitable for containing the roasts, sausages and the like to be bound by the elastic rings (17),
**characterized in that** below said concave element (15) an iron rod (19) is provided running parallel to said concave element (15), having an upward bending (21) in its fore part, towards outside, defining a means (21) for facilitating the application of the elastic rings which are pulled from a magazine (23) carrying the elastic rings (17) provided below said iron rod (19).

2. Device according to claim 1, **characterized in that** said magazine (23) carrying the elastic rings comprises three rod irons (25, 27, 29) forming together a bracket and arranged two in the upper part and one in the lower, parallel one to the other and perpendicular to the vertical rod (3); between said rod irons (25, 27) being provided a fourth rod iron (31), as an independent spring, so shaped as to maintain tidy the elastic rings (27) used during the binding operation.

3. Device according to claim 1 or 2, **characterized in that** said concave element and said magazine for carrying the elastic rings are made of stainless steel.

## Patentansprüche

1. Vorrichtung (1) zum Binden von Braten, Würsten und dergleichen mittels elastischer Ringe, wobei die Vorrichtung folgendes aufweist:
- eine vertikale Stange (3) mit einem rechteckigen Träger (5), in dem eine Klammer (7) verschiebbar ist, die von einer Gewindespindel (9) mitgenommen wird, die einen Bedienungsknopf (11) aufweist, der in die Gewindespindel integriert und mit dem die Klammer (7) gegen einen Arbeitstisch (13) preßbar ist,
- ein konkaves Element (15), das am oberen Ende und senkrecht zur vertikalen Stange (3) befestigt und das zur Aufnahme der Braten, Würste und dergleichen geeignet ist, die mit den elastischen Ringen (17) gebunden werden sollen,
**dadurch gekennzeichnet, daß** unterhalb dieses konkaven Elementes (15) eine parallel zu ihm verlaufende Eisenstange (19) vorgesehen ist, wobei das konkave Element an seinem vorderen Abschnitt eine nach oben und außen gerichtete Biegung (21) aufweist, die Mittel (21) zur Vereinfachung des Anbringens der elastischen Ringe bildet, die aus einem Magazin (23) gezogen werden, das die unterhalb der Eisenstange (19) vorgesehenen elastischen Ringe (17) trägt.

2. Vorrichtung nach Anspruch 1,
**dadurch gekennzeichnet, daß** das die elastischen Ringe tragende Magazin (23) drei Eisenstangen (25, 27, 29) aufweist, die zusammen einen Träger bilden und von denen zwei im oberen Teil und eine im unteren, parallel zu den anderen und senkrecht zur vertikalen Stange (3) verlaufenden Teil angeordnet sind, und daß zwischen diesen Eisenstangen (25, 27) als unabhängige Feder eine vierte Eisenstange (31) vorgesehen ist, die so geformt ist, daß sie die während des Bindevorganges verwendeten elastischen Ringe (27) in Ordnung hält.

3. Vorrichtung nach Anspruch 1 oder 2,
**dadurch gekennzeichnet, daß** das konkave Element und das Magazin, das die elastischen Ringe trägt, aus rostfreiem Stahl bestehen.

## Revendications

1. Dispositif (1) pour liage de rôtis, de saucisses et analogues, au moyen d'anneaux élastiques, ledit dispositif comprenant :
- une tige verticale (3) possédant un socle rectangulaire (5), dans laquelle coulisse une bride de fixation (7) retenue par une tige filetée (9) possédant un bouton de contrôle (11), intégrée à la tige filetée (9), pour serrer la bride de fixation (7) sur la table de travail (13) ;
- un élément concave (15), fixé à la tige verticale (3), sur sa partie supérieure et perpendiculairement à elle, ledit élément étant approprié pour maintenir les rôtis, saucisses et analogues à lier au moyen des anneaux élastiques (17),
**caractérisé en ce que** la partie inférieure dudit élément concave (15) est munie d'une tige métallique (19) glissant parallèlement audit élément concave (15), laquelle tige possédant un coude ascendant (21) dans sa partie antérieure, vers l'extérieur, définissant un moyen (21) pour faciliter l'application des anneaux élastiques qui sont tirés d'une structure ce stockage (« magazine ») (23) portant les anneaux élastiques (17) disposés en dessous de ladite tige métallique (19).

2. Dispositif selon la revendication 1, **caractérisé en ce que** ledit magasin (23) portant les anneaux élastiques comprend trois tiges métalliques (25, 27, 29) formant ensemble une patte (« bracket ») dans laquelle deux tiges sont disposées dans la partie supérieure et une dans la partie inférieure, parallèlement les unes aux autres et perpendiculairement à la tige verticale (3) ; entre lesdites tiges métalliques (25,27) est disposée une quatrième tige métailique (31), en tant que ressort indépendant, conçu de manière à maintenir dans l'ordre les anneaux élastiques (27) utilisés durant l'opération de liage.

3. Dispositif selon les revendications 1 ou 2, **caractérisé en ce que** ledit élément concave et ladite structure de stockage pour porter les anneaux élastiques sont constitués en acier inoxydable.
